(19) Europäisches Patentamt
European Patent Office
Office européen des brevets

(11) **EP 1 620 698 B1**

(12) **EUROPÄISCHE PATENTSCHRIFT**

(45) Veröffentlichungstag und Bekanntmachung des Hinweises auf die Patenterteilung:
**11.07.2007 Patentblatt 2007/28**

(21) Anmeldenummer: **04739146.1**

(22) Anmeldetag: **06.05.2004**

(51) Int Cl.:
*G01C 19/56* *(2006.01)*

(86) Internationale Anmeldenummer:
**PCT/EP2004/004844**

(87) Internationale Veröffentlichungsnummer:
**WO 2004/099716 (18.11.2004 Gazette 2004/47)**

(54) **BETRIEBSVERFAHREN FÜR EINEN CORIOLISKREISEL UND DAFÜR GEEIGNETE AUSWERTE-/ REGELELEKTRONIK UND PULSMODULATOR**

OPERATING METHOD FOR A CORIOLIS GYROSCOPE AND EVALUATION/ADJUSTMENT ELECTRONIC SYSTEM AND PULSE MODULATOR SUITABLE THEREFOR

PROCEDE DE FONCTIONNEMENT D'UN GYROSCOPE VIBRANT, DISPOSITIF ELECTRONIQUE D'EVALUATION ET DE REGULATION APPROPRIE ET MODULATEUR D'IMPULSIONS

(84) Benannte Vertragsstaaten:
**AT BE BG CH CY CZ DE DK EE ES FI FR GB GR HU IE IT LI LU MC NL PL PT RO SE SI SK TR**

(30) Priorität: **08.05.2003 DE 10320675**

(43) Veröffentlichungstag der Anmeldung:
**01.02.2006 Patentblatt 2006/05**

(73) Patentinhaber: **LITEF GmbH**
**79115 Freiburg (DE)**

(72) Erfinder: **SPAHLINGER, Günter**
**70188 Stuttgart (DE)**

(74) Vertreter: **Müller, Frithjof E.**
**Müller Hoffmann & Partner**
**Patentanwälte**
**Innere Wiener Strasse 17**
**81667 München (DE)**

(56) Entgegenhaltungen:
**EP-A- 1 072 893** **DE-A- 19 739 903**
**US-A- 5 992 233**

**Beschreibung**

Die Erfindung betrifft ein Betriebsverfahren für einen Corioliskreisel und eine dafür geeignete Auswerte-/Regelelektronik.

Corioliskreisel (auch Vibrationskreisel genannt) werden in zunehmendem Umfang zu Navigationszwecken eingesetzt; sie weisen ein Massensystem auf, das in Schwingungen versetzt wird. Diese Schwingung ist in der Regel eine Überlagerung einer Vielzahl von Einzelschwingungen. Diese Einzelschwingungen des Massensystems sind zunächst voneinander unabhängig und lassen sich jeweils abstrakt als "Resonatoren" auffassen. Zum Betrieb eines Vibrationskreisels sind wenigstens zwei Resonatoren erforderlich: einer dieser Resonatoren (erster Resonator) wird künstlich zu Schwingungen angeregt, die im Folgenden als "Anregungsschwingung" bezeichnet wird. Der andere Resonator (zweiter Resonator) wird nur dann zu Schwingungen angeregt, wenn der Vibrationskreisel bewegt/gedreht wird. In diesem Fall treten nämlich Corioliskräfte auf, die den ersten Resonator mit dem zweiten Resonator koppeln, der Anregungsschwingung des ersten Resonators Energie entnehmen und diese auf die Ausleseschwingung des zweiten Resonators übertragen. Die Schwingung des zweiten Resonators wird im Folgenden als "Ausleseschwingung" bezeichnet. Um Bewegungen (insbesondere Drehungen) des Corioliskreisels zu ermitteln, wird die Ausleseschwingung abgegriffen und ein entsprechendes Auslesesignal (z. B. das Ausleseschwingungs-Abgriffsignal) daraufhin untersucht, ob Änderungen in der Amplitude der Ausleseschwingung, die ein Maß für die Drehung des Corioliskreisels darstellen, aufgetreten sind. Corioliskreisel können sowohl als Open-Loop-System als auch als Closed-Loop-System realisiert werden. In einem Closed-Loop-System wird über jeweilige Regelkreise die Amplitude der Ausleseschwingung fortlaufend auf einen festen Wert - vorzugsweise null - rückgestellt.

Das Dokument US-A-5 992 233 beschreibt einen Corioliskreisel mit Rückkopplungsschleife, bei dem der Resonator zur Reduzierung von Quadraturfehlern mit Kraftsignalen beaufschlagt wird.

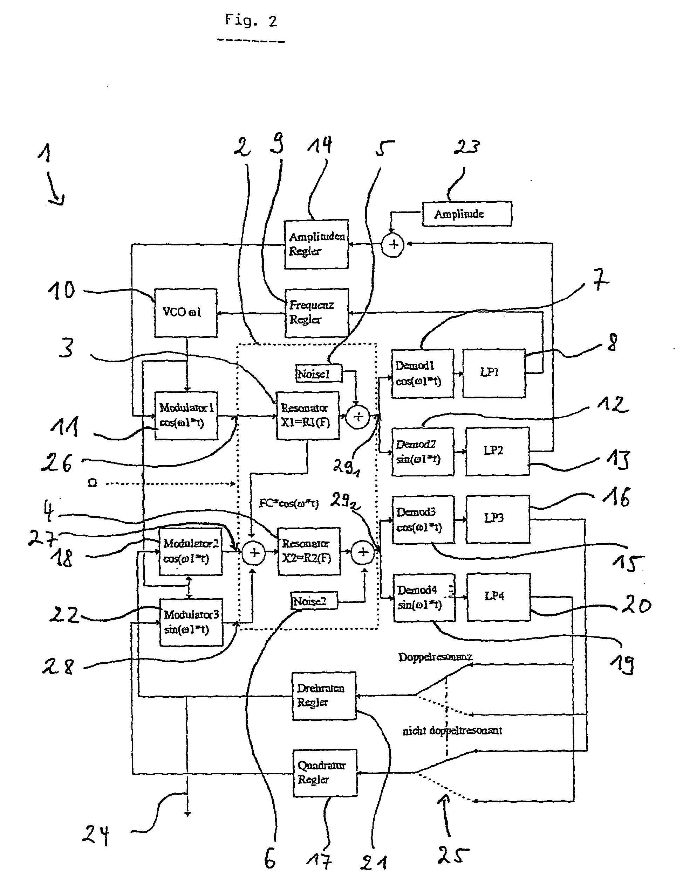

Im Folgenden wird zur weiteren Verdeutlichung der Funktionsweise eines Corioliskreisels unter Bezugnahme auf Figur 2 ein Beispiel eines Corioliskreisels in Closed-Loop-Ausführung beschrieben.

Ein solcher Corioliskreisel 1 weist ein in Schwingungen versetzbares Massensystem 2 auf, das im Folgenden auch als "Resonator" bezeichnet wird. Diese Bezeichnung ist zu unterscheiden von den oben erwähnten "abstrakten" Resonatoren, die Einzelschwingungen des "echten" Resonators darstellen. Wie bereits erwähnt, kann der Resonator 2 als System aus zwei "Resonatoren" (erster Resonator 3 und zweiter Resonator 4) aufgefasst werden. Sowohl der erste als auch der zweite Resonator 3, 4 sind jeweils an einen Kraftgeber (nicht gezeigt) und an ein Abgriffssystem (nicht gezeigt) gekoppelt. Das Rauschen, das durch die Kraftgeber und die Abgriffssysteme erzeugt wird, ist hier durch Noisel (Bezugszeichen 5) und Noise2 (Bezugszeichen 6) schematisch angedeutet.

Der Corioliskreisel 1 weist des Weiteren vier Regelkreise auf:

Ein erster Regelkreis dient zur Regelung der Anregungsschwingung (d.h. der Frequenz des ersten Resonators 3) auf eine feste Frequenz (Resonanzfrequenz). Der erste Regelkreis weist einen ersten Demodulator 7, ein erstes Tiefpassfilter 8, einen Frequenzregler 9, einen VCO ("Voltage Controlled Oscillator") 10 und einen ersten Modulator 11 auf.

Ein zweiter Regelkreis dient zur Regelung der Anregungsschwingung auf eine konstante Amplitude und weist einen zweiten Demodulator 12, ein zweites Tiefpassfilter 13 und einen Amplitudenregler 14 auf.

Ein dritter und ein vierter Regelkreis dienen zur Rückstellung derjenigen Kräfte, die die Ausleseschwingung anregen. Dabei weist der dritte Regelkreis einen dritten Demodulator 15, ein drittes Tiefpassfilter 16, einen Quadraturregler 17 und einen zweiten Modulator 18 auf. Der vierte Regelkreis enthält einen vierten Demodulator 19, ein viertes Tiefpassfilter 20, einen Drehratenregler 21 und einen dritten Modulator 22.

Der erste Resonator 3 wird mit dessen Resonanzfrequenz $\omega 1$ angeregt. Die resultierende Anregungsschwingung wird abgegriffen, mittels des ersten Demodulators 7 in Phase demoduliert, und ein demoduliertes Signalanteil wird dem ersten Tiefpassfilter 8 zugeführt, der daraus die Summenfrequenzen entfernt. Das abgegriffene Signal wird im Folgenden auch als Anregungsschwingungs-Abgriffsignal bezeichnet. Ein Ausgangssignal des ersten Tiefpassfilters 8 beaufschlagt einen Frequenzregler 9, der in Abhängigkeit des ihm zugeführten Signals den VCO 10 so regelt, dass die In-Phase-Komponente im Wesentlichen zu Null wird. Dazu gibt der VCO 10 ein Signal an den ersten Modulator 11, der seinerseits einen Kraftgeber so steuert, dass der erste Resonator 3 mit einer Anregungskraft beaufschlagt wird. Ist die In-Phase-Komponente Null, so schwingt der erste Resonator 3 auf seiner Resonanzfrequenz $\omega 1$. Es sei erwähnt, dass sämtliche Modulatoren und Demodulatoren auf Basis dieser Resonanzfrequenz $\omega 1$ betrieben werden.

Das Anregungsschwingungs-Abgriffsignal wird des Weiteren dem zweiten Regelkreis zugeführt und durch den zweiten Demodulator 12 demoduliert, dessen Ausgabe das zweite Tiefpassfilter 13 passiert, dessen Ausgangssignal wiederum dem Amplitudenregler 14 zugeführt wird. In Abhängigkeit dieses Signals und eines Soll-Amplitudengebers 23 regelt der Amplitudenregler 14 den ersten Modulator 11 so, dass der erste Resonator 3 mit einer konstanten Amplitude schwingt (d.h. die Anregungsschwingung weist eine konstante Amplitude auf).

Wie bereits erwähnt wurde, treten bei Bewegung/Drehungen des Corioliskreisels 1 Corioliskräfte - in der Zeichnung durch den Term FC·cos($\omega 1$·t) angedeutet - auf, die den ersten Resonator 3 mit dem zweiten Resonator 4 koppeln und damit den zweiten Resonator 4 zum Schwingen anregen. Eine resultierende Ausleseschwingung der Frequenz $\omega 1$ wird abgegriffen, sodass ein entsprechendes Ausleseschwingungs-Abgriffsignal (Auslesesignal) sowohl dem dritten als auch dem vierten Regelkreis zugeführt wird. Im dritten Regelkreis wird dieses Signal durch den dritten Demodulator 15 demoduliert, Summenfrequenzen durch das dritte Tiefpassfilter 16 entfernt und das tiefpassgefilterte Signal dem Quadraturregler 17 zugeführt, dessen Ausgangssignal den dritten Modulator 22 so beaufschlagt, dass entsprechende Quadraturanteile der Ausleseschwingung rückgestellt werden. Analog hierzu wird im vierten Regelkreis das Ausleseschwingungs-Abgriffsignal durch den vierten Demodulator 19 demoduliert, durchläuft das vierte Tiefpassfilter 20, und ein entsprechend tiefpassgefiltertes Signal beaufschlagt einerseits den Drehratenregler 21, dessen Ausgangssignal proportional zur momentanen Drehrate ist und als Drehraten-Messergebnis auf einen Drehratenausgang 24 gegeben wird, und andererseits den zweiten Modulator 18, der entsprechende Drehratenanteile der Ausleseschwingung rückstellt.

Ein Corioliskreisel 1 wie oben beschrieben kann sowohl doppelresonant als auch nichtdoppelresonant betrieben werden. Wird der Corioliskreisel 1 doppelresonant betrieben, so ist die Frequenz $\omega 2$ der Ausleseschwingung annähernd gleich der Frequenz $\omega 1$ der Anregungsschwingung, wohingegen im nichtdoppelresonanten Fall die Frequenz $\omega 2$ der Ausleseschwingung verschieden von der Frequenz $\omega 1$ der Anregungsschwingung ist. Im Fall der Doppelresonanz beinhaltet das Ausgangssignal des vierten Tiefpassfilters 20 entsprechende Information über die Drehrate, im nichtdoppelresonanten Fall dagegen das Ausgangssignal des dritten Tiefpassfilters 16. Um zwischen den unterschiedlichen Betriebsarten doppelresonant/nichtdopelresonant umzuschalten, ist ein Doppelschalter 25 vorgesehen, der die Ausgänge des dritten und vierten Tiefpassfilters 16, 20 wahlweise mit dem Drehratenregler 21 und dem Quadraturregler 17 verbindet.

Der oben beschriebene Aufbau des Corioliskreisels, insbesondere der Aufbau der Auswerte-/Regelelektronik bietet den Vorteil einer relativ hohen Drehratenempfindlichkeit bei gleichzeitig einfacher mechanischer Struktur des Resonators 2. Nachteilig ist jedoch, dass ein hoher Aufwand hinsichtlich der elektronischen Komponenten der Auswerte-/Regelelektronik besteht. So müssen in der in Fig. 2 gezeigten Ausführungsform des Corioliskreisels mehrere Digital-Analog-Wandler verwendet werden (z. B. an den mit Bezugsziffern 26, 27 und 28 bezeichneten Stellen), die teuer sind und viel elektrische Leistung benötigen. Ferner ist zu erwähnen, dass die Digital-Analog-Wandler häufig mehrere Versorgungsspannungen benötigen und sich nur schlecht zusammen mit anderen elektronischen Bauteilen, insbesondere digitalen Bauteilen, integrieren lassen, was der Miniaturisierung Grenzen setzt. Weiterhin müssen in der in Fig. 2 gezeigten Ausführungsform des Corioliskreisels wenigstens zwei Analog-Digital-Wandler verwendet werden (an den mit Bezugsziffern $29_1$ und $29_2$ bezeichneten Stellen).

Die der Erfindung zugrundeliegende Aufgabe ist es, ein Betriebsverfahren für einen doppelresonanten Corioliskreisel anzugeben, das mit möglichst wenig elektronischen Komponenten, insbesondere Analog-Digital-Wandlern und Digital-Analog-Wandlern auskommt, so dass Corioliskreisel mit einer kostengünstigen und hochminiaturisierten Auswerte-/Regelelektronik realisiert werden können.

Diese Aufgabe wird durch ein Verfahren gemäß den Merkmalen des Patentanspruchs 1 gelöst. Ferner stellt die Erfindung eine Auswerte-/Regelelektronik gemäß Patentanspruch 7 bereit. Schließlich stellt die Erfindung einen Pulsmodulator zur Ausführung des erfindungsgemäßen Verfahrens gemäß Patentanspruch 8 bereit. Vorteilhafte Ausgestaltungen und Weiterbildungen des Erfindungsgedankens finden sich in jeweiligen Unteransprüchen.

Erfindungsgemäß werden bei einem Betriebsverfahren eines Corioliskreisels digitale Auslesesignale erzeugt, die ein Maß für die momentanen Amplituden/Frequenzen der Anregungsschwingung/Ausleseschwingung des Resonators des Corioliskreisels oder für andere Parameter der Anregungsschwingung/Ausleseschwingung darstellen. Der Resonator des Corioliskreisels wird mit Kraftsignalen beaufschlagt, wobei die Kraftsignale in Abhängigkeit der digitalen Auslesesignale so geregelt werden, dass die Anregungsschwingung/Ausleseschwingung bestimmte Amplituden/Frequenzen oder andere gewünschte Parameterwerte annehmen. Beispielsweise wird in einem Closed-Loop-System die Amplitude der Ausleseschwingung auf den Wert Null geregelt, und die Amplitude der Anregungsschwingung auf einen konstanten, von Null verschiedenen Wert eingestellt. Ein wesentlicher Aspekt der Erfindung ist, dass die Kraftsignale aus quantisierten Ausgangssignalen eines Pulsmodulators erzeugt werden, der mit digitalen Anregungs-/Kompensationssignalen, die aus den digitalen Auslesesignalen abgeleitet werden, gespeist wird.

Das erfindungsgemäße Verfahren kann gleichermaßen auf Corioliskreisel angewandt werden, die doppelresonant, nicht-doppelresonant, als Open-Loop-System oder als Closed-Loop-System realisiert sind.

Erfindungsgemäß werden also die Digital-Analog-Wandler durch einen Pulsmodulator ersetzt. Die Ausgangssignale des Pulsmodulators sind vorzugsweise ternär quantisiert, da für eine Doppelelektrodenarchitektur elektrostatischer Kraftgeber, wie sie bei einem doppelresonanten Corioliskreisel zum Einsatz kommen, eine ternäre Quantisierung besonders vorteilhaft ist.

In einer bevorzugten Ausführungsform wird durch den Pulsmodulator ein erstes und ein zweites jeweils ternär quantisiertes Ausgangssignal erzeugt, wobei das erste Ausgangssignal in eine erste Folge von ternär quantisierten Kraftimpulsen transformiert wird, und das zweite Ausgangssignal in eine zweite Folge von ternär quantisierten Kraftimpulsen umgewandelt wird. Die erste Folge von Kraftimpulsen stellt hierbei denjenigen Teil der Kraftsignale dar, der zur Einstellung gewünschter Amplituden/Frequenzen oder anderer Parameter der Anregungsschwingung dient, wobei die zweite Folge von Kraftimpulsen denjenigen Teil der Kraftsignale darstellt, der zur Einstellung gewünschter Amplituden/ Frequenzen oder anderer Parameter der Ausleseschwingung dient.

Der Pulsmodulator kann beispielsweise so ausgelegt werden, dass die beiden ternär quantisierten Ausgangssignale $S_1$, $S_2$ des Pulsmodulators jeweils die Werte {-1, 0, +1} annehmen können, die in geeigneter Weise digital kodiert sind. Die Ausgangssignale werden in geeignete elektrische Spannungsimpulse umgewandelt und an entsprechende stationäre Elektroden angelegt, so dass auf das bewegliche Elektrodengebilde des Corioliskreisels (bewegliche Massen und Rückstellfedern) entweder eine "negative" ($S_1$ = -1), keine ($S_1$ = 0) oder eine "positive" ($S_1$ = +1) Kraft ausgeübt wird. Dies gilt analog für das Ausgangssignal $S_2$.

Die Erzeugung der digitalen Auslesesignale erfolgt vorzugsweise dadurch, dass eine Menge an elektrischer Ladung, die aufgrund der Schwingung des Resonators auf eine bewegliche Elektrode (Mittelelektrode) fließt, mittels eines Ladungsverstärkers gemessen wird, ein entsprechendes analoges Ausgangssignal des Ladungsverstärkers in ein digitales Ausgangssignal umgewandelt wird, und über eine Signaltrennung in Abhängigkeit momentaner und/oder zeitlich älterer, ternär quantisierter Ausgangssignalwerte des Pulsmodulators aus dem digitalen Ausgangssignal des Ladungsverstärkers die digitalen Auslesesignale ermittelt werden. Die digitalen Auslesesignale können also nicht allein aus dem digitalen Ausgangssignal des Ladungsverstärkers gewonnen werden, es ist zusätzlich die Information notwendig, die in den ternär quantisierten Ausgangssignalen des Pulsmodulators enthalten ist. Der Begriff "Mittelelektrode" bedeutet hier das innere, bewegliche Elektrodengebilde des Corioliskreisels, bestehend aus den beweglichen, in Schwingung versetzbaren Massen und entsprechenden Rückstellfedern, oder zumindest Teile davon.

Die digitalen Auslesesignale werden in üblicher Weise mittels eines Demodulationsprozesses jeweils in eine Normal- und eine Quadraturkomponente zerlegt. Dann werden mittels eines Regelungsprozesses aus den Normal- und Quadraturkomponenten der digitalen Auslesesignale Normal- und Quadraturkomponenten der digitalen Anregungs-/ Kompensationssignale erzeugt, die den Pulsmodulator speisen. Die digitalen Anregungs-/Kompensationssignale werden so geregelt, dass sich die gewünschten Parameterwerte der Anregungsschwingung/Ausleseschwingung einstellen.

Zur Realisierung des oben beschriebenen Verfahrens stellt die Erfindung eine Auswerte-/Regelelektronik zur Verwendung in einem Corioliskreisel bereit, die folgende Komponenten aufweist:

- eine Einheit zur Erzeugung von Auslesesignalen, die ein Maß für die momentanen Amplituden/Frequenzen oder anderer Parameter der Anregungsschwingung/Ausleseschwingung des Resonators des Corioliskreisels darstellen,
- wenigstens einen Regelkreis, durch den in Abhängigkeit der digitalen Auslesesignale Kraftsignale erzeugt und auf den Resonator gegeben werden, wobei die Kraftsignale so geregelt werden, dass die Anregungsschwingungs/ Ausleseschwingung gewünschte Amplituden/Frequenzen oder andere Parameterwerte annehmen,
- einen Pulsmodulator, der ein Teil des Regelkreises ist, und der mit digitalen Anregungs-/Kompensationssignalen, die aus den digitalen Auslesesignalen abgeleitet werden, gespeist wird, wobei aus quantisierten Ausgangssignalen des Pulsmodulators die Kraftsignale erzeugbar sind.

Die erfindungsgemäße Auswerte-/Regelelektronik bietet die Vorteile, dass sie kostengünstig und hochminiaturisiert hergestellt werden kann.

Der erfindungsgemäße Pulsmodulator zur Umwandlung eines komplexen Eingangssignals in ein Pulssignal umfasst eine Subtrahiererstufe, die aus der Differenz des komplexen Eingangssignals und eines Rückkopplungssignals ein Regelabweichungssignal erzeugt. Des Weiteren umfasst der Pulsmodulator eine Signalumwandlungsstufe, die das Regelabweichungssignal in ein Regelsignal umwandelt. In einer ersten Multipliziererstufe wird das Regelsignal mit einem mit der Frequenz $\omega_0$ oszillierenden komplexen Mischsignal multipliziert und so mindestens einer von Realteil und Imaginärteil eines um $\omega_0$ heraufgemischten Regelsignals erzeugt. Darüber hinaus umfasst der Pulsmodulator eine Quantisierungsstufe, die mindestens einen von Realteil und Imaginärteil des um $\omega_0$ heraufgemischten Regelsignals quantisiert und das Pulssignal erzeugt, sowie eine Rückkopplungseinheit, welche ausgehend von dem Pulssignal das Rückkopplungssignal für die Subtrahiererstufe erzeugt.

Die Funktionsweise des erfindungsgemäßen Pulsmodulators, welcher eine vorteilhafte Modifikation eines klassischen Sigma-Delta-Wandlers darstellt, soll im Folgenden ohne Beschränkung der Allgemeinheit für den Beispielfall eines konstant gehaltenen Eingangssignals erläutert werden. Durch die Subtrahiererstufe und die Signalumwandlungsstufe wird dieses Eingangssignal in ein ebenfalls nur schwach zeitveränderliches Regelsignal umgewandelt. Im Unterschied zu klassischen Sigma-Delta-Wandlern wird dieses Regelsignal aber nun durch die erste Multipliziererstufe mit einem komplexen Mischsignal der Frequenz $\omega_0$ multipliziert, um so ein auf die Frequenz $\omega_0$ heraufgemischtes Regelsignal zu erzeugen. Der Realteil oder der Imaginärteil dieses mit der Frequenz $\omega_0$ oszillierenden Regelsignals wird anschließend durch die Quantisierungsstufe quantisiert, so dass man am Ausgang der Quantisierungsstufe ein reellwertiges Pulssignal mit einer dominanten Frequenzkomponente bei der Frequenz $\omega_0$ erhält. Dieses reellwertige Pulssignal bildet mit Hilfe von positiven oder negativen Pulsen ein sinusoidales Signal der Frequenz $\omega_0$ nach. Dieses Pulssignal stellt gleichzeitig den Ausgangspunkt für die Berechnung des Rückkopplungssignals dar, welches zur Subtrahiererstufe rückgekoppelt wird und dort vom Eingangssignal abgezogen wird, um die Regelabweichung zu ermitteln.

Zur Erzeugung des Pulssignals ist nicht zwingend erforderlich, sowohl den Realteil als auch den Imaginärteil des um $\omega_0$ heraufgemischten Regelsignals zu berechnen. Wenn das Pulssignal aus dem Realteil des heraufgemischten Regelsignals abgeleitet werden soll, dann muss der Imaginärteil des heraufgemischten Regelsignals nicht zwingend erzeugt werden.

Der wesentliche Vorteil des erfindungsgemäßen Pulsmodulators gegenüber herkömmlichen Sigma-Delta-Modulatoren ist, dass der Bereich des niedrigen Quantisierungsrauschens von dem Niederfrequenzbereich in der Umgebung vom $\omega=0$ zur Arbeitsfrequenz $\omega_0$ hin verschoben wird. Dies wird durch komplexes Heraufmischen des Regelsignals in der ersten Multipliziererstufe erreicht. Damit erhält man ein Pulssignal, das gerade im relevanten Spektralbereich um $\omega_0$ herum einen niedrigen Rauschpegel aufweist.

Ausgangspunkt für das Verständnis der Rauschcharakteristik ist, dass die Signalumwandlungsstufe, welche beispielsweise mit Hilfe eines Integrators realisiert werden kann, eine Tiefpass-Charakteristik aufweist. Dies bedeutet, dass höherfrequente Komponenten durch die Signalumwandlungsstufe teilweise unterdrückt werden. Bei klassischen Sigma-Delta-Wandlern verursacht diese Unterdrückung der höherfrequenten Anteile im Regelkreis einen Anstieg des Quantisierungsrauschens bei diesen höheren Frequenzen. Im niederfrequenten Bereich ist das Quantisierungsrauschen dagegen gering. Bei dem erfindungsgemäßen Pulsmodulator wird das am Ausgang der Signalumwandlungsstufe abgreifbare Regelsignal durch eine Multiplikation mit dem komplexen Mischsignal der Frequenz $\omega_0$ auf die Frequenz $\omega_0$ hochgemischt. Damit wird auch der Bereich niedrigen Quantisierungsrauschens von der Frequenz $\omega=0$ zur Mischfrequenz $\omega_0$ hin verlagert, obwohl die eingangsseitige Signalumwandlungsstufe weiterhin ein nicht hochgemischtes Signal verarbeitet. Auf diese Weise erhält man ein Pulssignal mit einem Rauschpegel, der in der Umgebung von $\omega_0$ gering ist.

Der erfindungsgemäße Pulsmodulator lässt sich kostengünstig implementieren, benötigt relativ wenig elektrische Leistung und lässt sich auf einfache Weise zusammen mit der digitalen Elektronik integrieren.

Es ist von Vorteil, wenn der Pulsmodulator einen Inphase-Signalpfad zur Verarbeitung des Realteils des Eingangssignals sowie einen Quadratur-Signalpfad zur Verarbeitung des Imaginärteils des Eingangssignals umfasst. Weiterhin ist es von Vorteil, wenn es sich bei dem Regelabweichungssignal, dem Regelsignal und dem Rückkopplungssignal jeweils um komplexe Signale handelt, die jeweils einen reellen Signalanteil sowie einen imaginären Signalanteil umfassen. Um zu erreichen, dass das reellwertige Pulssignal den Realteil oder Imaginärteil des um $\omega_0$ heraufgemischten Regelsignals phasenrichtig wiedergibt, werden die Subtrahiererstufe, die Signalumwandlungsstufe, die erste Multipliziererstufe und die Rückkopplungseinheit als komplexe Signalverarbeitungseinheiten ausgelegt, die jeweils einen Inphase- sowie einen Quadratur-Signalpfad aufweisen. Vom Ausgangssignal der ersten Multipliziererstufe wird aber lediglich der Realteil (oder aber der Imaginärteil) benötigt, um daraus mit Hilfe der Quantisierungsstufe das reellwertige Pulssignal abzuleiten. Die Quantisierungsstufe kann daher als reelle Verarbeitungsstufe ausgelegt sein. In der Rückkopplungseinheit wird das reellwertige Pulssignal dann allerdings wieder in ein komplexes Rückkopplungssignal übersetzt. Mit Hilfe dieser Auslegung des Pulsmodulators kann ein reellwertiges Pulssignal synthetisiert werden, das eine harmonische Schwingung der Frequenz $\omega_0$ mit geringem Phasen- und Amplitudenrauschen phasenrichtig wiedergibt.

Gemäß einer vorteilhaften Ausführungsform der Erfindung umfasst die Signalumwandlungsstufe eine Integratorstufe, die das Regelabweichungssignal aufsummiert und als Regelsignal ein integriertes Signal erzeugt. Durch Aufintegrieren des Regelabweichungssignals kann erreicht werden, dass das (komplexe) integrierte Signal ständig dem komplexen Eingangssignal nachgeführt wird. Da eine Integratorstufe eine Tiefpasscharakteristik aufweist, erhält man am Ausgang der Integratorstufe ein Regelsignal mit vermindertem Rauschpegel im Bereich um $\omega=0$. Wenn dieses Regelsignal dann durch die erste Multipliziererstufe heraufgemischt und anschließend quantisiert wird, erhält man ein Pulssignal mit der gewünschten Rauschcharakteristik.

Es ist von Vorteil, wenn die Integratorstufe einen ersten Integrator für den Inphase-Signalpfad und einen zweiten Integrator für den Quadratur-Signalpfad umfasst, wobei der erste Integrator den Realteil des Regelabweichungssignals aufsummiert, und wobei der zweite Integrator den Imaginärteil des Regelabweichungssignals aufsummiert. Eine komplexe Integratorstufe für das komplexe Regelabweichungssignal kann auf diese Weise mit Hilfe von zwei separaten Integratoren realisiert werden.

Es ist von Vorteil, wenn die Signalumwandlungsstufe eine Verstärkerstufe umfasst. Der Verstärkungsfaktor wird dabei so gewählt, dass der Quantisierer den richtigen Eingangssignalpegel erhält.

Gemäß einer weiteren vorteilhaften Ausführungsform der Erfindung umfasst die erste Multipliziererstufe einen ersten Multiplizierer für den Inphase-Signalpfad und einen zweiten Multiplizierer für den Quadratur-Signalpfad. Der erste Multiplizierer multipliziert den Realteil des Regelsignals mit dem Realteil des mit der Frequenz $\omega_0$ oszillierenden komplexen Mischsignals und erzeugt so ein erstes Ergebnissignal. Der zweite Multiplizierer multipliziert den Imaginärteil des Regelsignals mit dem Imaginärteil des mit der Frequenz $\omega_0$ oszillierenden komplexen Mischsignals und erzeugt so ein zweites Ergebnissignal. Gemäß einer weiteren vorteilhaften Ausführungsform umfasst der Pulsmodulator einen Addierer, welcher zur Bestimmung des Realteils des heraufgemischten Regelsignals das erste Ergebnissignal des ersten Multiplizierers und das zweite Ergebnissignal des zweiten Multiplizierers zu einem Summensignal addiert.

Wenn man annimmt, dass das komplexe Regelsignal die Form $R+j\cdot I$ besitzt, und man das komplexe Mischsignal beispielsweise in der Form $e^{-j\omega_0 t}$ darstellt, dann ergibt sich das erste Ergebnissignal des ersten Multiplizierers zu R.cos

($\omega_0$t). Das zweite Ergebnissignal des zweiten Multiplizierers nimmt die Form I·sin($\omega_0$t) an, und als Summensignal liefert der Addierer das Signal R·cos($\omega_0$t)+I·sin($\omega_0$t). Dieses Signal entspricht aber genau dem Realteil von (R+ j·I)·e$^{-j\omega_0 t}$. Mittels des ersten Multiplizierers, des zweiten Multiplizierers und des Addierers kann so der Realteil der komplexen Multiplikation von Regelsignal und Mischsignal ermittelt werden.

Gemäß einer vorteilhaften Ausführungsform der Erfindung wird das vom Addierer gelieferte Summensignal dann von der Quantisierungsstufe quantisiert, um so das reellwertige Pulssignal zu erzeugen.

Dabei ist es von Vorteil, wenn zum Eingangssignal der Quantisierungsstufe ein Rauschpegel addiert wird. Der Pulsmodulator wird mit einer Abtastfrequenz $\omega_A$ getaktet, die deutlich höher sein muss als die Mischfrequenz $\omega_0$. Bei bestimmten Verhältnissen von $\omega_0$ zu $\omega_A$ bilden sich im Pulsmodulator Kippschwingungen, die als zusätzliche Peaks im Frequenzspektrum des Pulssignals erkennbar sind. Indem man zum Eingangssignal des Quantisierers ein Rauschsignal addiert, wird das Ergebnis der Quantisierung statistisch gerundet. Mit Hilfe dieses Tricks kann die Ausbildung von Kippschwingungen verhindert werden.

Die Quantisierungsstufe führt vorzugsweise eine binäre Quantisierung oder eine ternäre Quantisierung ihres jeweiligen Eingangssignals durch. Bei der binären Quantisierung kann das Pulssignal lediglich die Werte 0 und 1 annehmen. Man erhält daher ein Pulssignal, das lediglich positive Spannungspulse enthält. Ein ternär quantisiertes Pulssignal kann die Werte -1, 0, 1 annehmen. Ein derartiges Pulssignal umfasst daher sowohl positive als auch negative Spannungspulse. Eine ternäre Quantisierung wird daher immer dann durchgeführt, wenn ein Pulssignal mit sowohl positiven als auch negativen Pulsen benötigt wird.

Vorzugsweise umfasst die Rückkopplungseinheit eine zweite Multipliziererstufe, die das Pulssignal mit einem mit der Frequenz $\omega_0$ oszillierenden konjugiert komplexen Mischsignal multipliziert und so das um $\omega_0$ heruntergemischte Rückkopplungssignal für den Subtrahierer erzeugt. Das Pulssignal wurde durch Quantisierung des Realteils des heraufgemischten Regelsignals erzeugt und besitzt daher bei der Frequenz $\omega_0$ seine dominierende Frequenzkomponente. Bevor das Pulssignal als Rückkopplungssignal verwendet werden kann, muss es daher wieder ins Basisband heruntergemischt werden. Zu diesem Zweck wird das Pulssignal mit einem konjugiert komplexen Mischsignal der Frequenz $\omega_0$ multipliziert, um so ein heruntergemischtes komplexes Rückkopplungssignal zu erhalten.

Vorzugsweise umfasst die zweite Multipliziererstufe einen dritten Multiplizierer zur Erzeugung des Realteils des Rückkopplungssignals und einen vierten Multiplizierer zur Erzeugung des Imaginärteils des Rückkopplungssignals. Der dritte Multiplizierer multipliziert das Pulssignal mit dem Realteil des mit der Frequenz $\omega_0$ oszillierenden konjugiert komplexen Mischsignals, und der vierte Multiplizierer multipliziert das Pulssignal mit dem Imaginärteil des konjugiert komplexen Mischsignals der Frequenz $\omega_0$. Um die bei der Frequenz $\omega_0$ befindliche Frequenzkomponente des Pulssignals in die richtige Richtung zu verschieben, muss die Multiplikation des Pulssignals mit dem Mischsignal im Komplexen durchgeführt werden. Bei dem Pulssignal y(t) handelt es sich um ein reelles Signal, während das konjugiert komplexe Mischsignal in der Form e$^{+j\omega_0 t}$ dargestellt werden kann. Die komplexe Multiplikation liefert daher ein komplexes Rückkopplungssignal mit dem Realteil y(t)·cos($\omega_0$t) und dem Imaginärteil y(t) ·sin($\omega_0$t).

Vorzugsweise wird der Pulsmodulator mit einer Abtastfrequenz $\omega_A$ betrieben, welche 2 bis 1000 mal höher ist als die Mischfrequenz $\omega_0$. Dies ist notwendig, um hinsichtlich der heraufgemischten Signale die Nyquist-Bedingung zu erfüllen.

Gemäß einer weiteren vorteilhaften Ausführungsform ist der Pulsmodulator mit Hilfe eines digitalen Signalprozessors (DSP) implementiert. Sämtliche für den Betrieb des Pulsmodulators erforderlichen Operationen lassen sich mit Hilfe von Signalverarbeitungsroutinen programmieren.

Die erfindungsgemäße Ansteuerschaltung für einen mikromechanischen Resonator umfasst mindestens einen Pulsmodulator der oben beschriebenen Art. Vorzugsweise wird das von dem mindestens einen Pulsmodulator erzeugte Pulssignal zur elektrostatischen Schwingungsanregung des Resonators verwendet. Das erzeugte Pulssignal kann direkt mit den Anregungselektroden des Resonators verbunden werden. Dabei ist es von Vorteil, wenn die Mischfrequenz $\omega_0$ des Pulsmodulators einer Resonanzfrequenz des Resonators entspricht, denn dann ist eine effektive Anregung des Schwingers gewährleistet.

Ein erfindungsgemäßer Frequenzgenerator zur Synthese eines Pulssignals mit vorgegebener Frequenz und Phase umfasst mindestens einen Pulsmodulator der oben beschriebenen Art. Mit dem erfindungsgemäßen Pulsmodulator kann zu einer vorgegebenen Frequenz und Phase ein entsprechendes Pulssignal y(t) erzeugt werden. Dabei kann die Phasenlage des erzeugten Pulssignals über das Verhältnis von Realteil und Imaginärteil des Eingangssignals x(t) sehr genau vorgegeben werden. Das erzeugte Pulssignal weist in der Umgebung von $\omega_0$ einen geringen Rauschpegel auf.

Gemäß einer weiteren vorteilhaften Ausführungsform ist dem Pulsmodulator ein Bandpassfilter nachgeschaltet. Mit diesem nachgeschalteten Bandpass lassen sich die weiter von $\omega_0$ entfernten Frequenzanteile wegfiltern, in denen der Rauschpegel hoch ist.

Die Erfindung und weitere vorteilhafte Einzelheiten werden nachfolgend unter Bezug auf die Zeichnungen in beispielhaften Ausführungsformen näher erläutert. Es zeigen:

Fig. 1    die erfindungsgemäße Auswerte-/Regelelektronik und das erfindungsgemäße Verfahren in einer bevorzugten Ausführungsform.

**Fig. 2** den schematischen Aufbau eines herkömmlichen Corioliskreisels.

**Fig. 3** ein komplexes Blockschaltbild des erfindungsgemäßen Pulsmodulators;

**Fig. 4** ein Blockdiagramm des Pulsmodulators, in dem der Inphase- und der Quadraturpfad separat eingezeichnet sind;

**Fig. 5** ein ternär quantisiertes Pulssignal y(t);

**Fig. 6** ein Frequenzspektrum des am Ausgang des Quantisierers erhaltenen Pulssignals y(t);

**Fig. 7** das Frequenzspektrum von Fig. 6 nach einer Filterung durch einen mikromechanischen Schwinger;

**Fig. 8** ein Frequenzspektrum eines Pulssignals y(t), das für ein Verhältnis von Mischfrequenz zu Abtastfrequenz von $\omega_0/\omega_A = 0{,}25$ aufgezeichnet wurde;

**Fig. 9** einen Pulsmodulator mit statistischer Rundung;

**Fig. 10** das Frequenzspektrum von Fig. 8 bei Durchführung einer statistischen Rundung; und

**Fig. 11** ein Blockdiagramm eines zweidimensionalen Pulsmodulators.

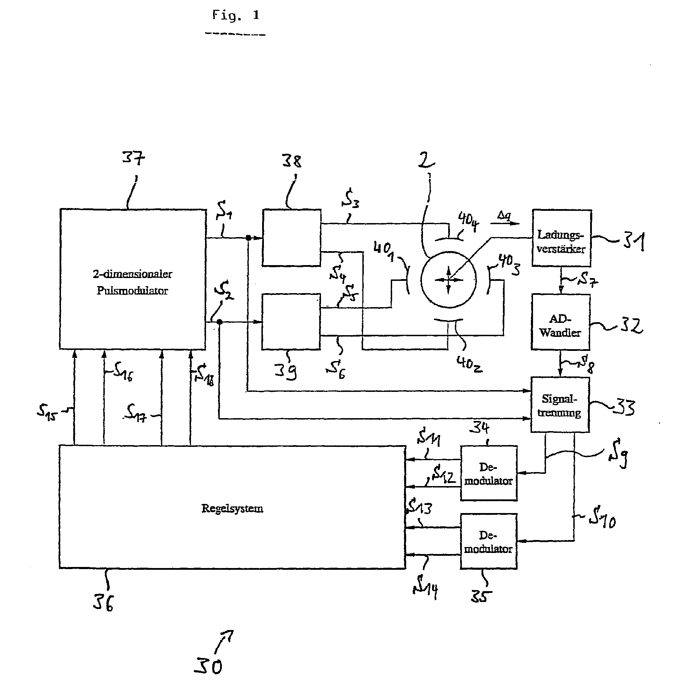

Fig. 1 zeigt eine Auswerte-/Regelelektronik 30, die einen Ladungsverstärker 31, einen Analog-Digital-Wandler 32, eine Signaltrennung 33, einen ersten Demodulator 34, einen zweiten Demodulator 35, ein Regelsystem 36, einen zweidimensionalen Pulsmodulator 37, eine erste und zweite Kraftimpuls-Umwandlungseinheit 38, 39, und eine erste bis vierte Kraftgeberelektrode $40_1$ bis $40_4$ aufweist.
Die Gesamtheit der mit Bezugsziffern 31 bis 40 gekennzeichneten Bauteile bildet zwei Regelkreise: Einen Regelkreis zur Einstellung der Amplituden/Frequenzen der Anregungsschwingung und einen weiteren Regelkreis zur Einstellung der Amplituden/Frequenzen der Ausleseschwingung.
Wie Fig. 1 zeigt, weist die erfindungsgemäße Schaltung lediglich einen Analog-Digital-Wandler 32 und keine Digital-Analog-Wandler auf. Die Digital-Analog-Wandler sind hier durch den zweidimensionalen Pulsmodulator 37 sowie die beiden Kraftimpuls-Umwandlungseinheiten 38, 39 ersetzt.
Im Folgenden soll die Funktionsweise der erfindungsgemäßen Auswerte-/Regelelektronik näher erläutert werden.
Um die Amplituden/Frequenzen der Anregungsschwingung/Ausleseschwingung des Resonators 2 einzustellen, erzeugt der zweidimensionale Pulsmodulator 37 ein erstes und ein zweites ternär quantisiertes Ausgangssignal $S_1$, $S_2$, wobei das erste ternär quantisierte Ausgangssignal $S_1$ in der ersten Kraftimpuls-Umwandlungseinheit 38 in Kraftimpulssignale (Spannungssignale) $S_3$ und $S_4$ umgewandelt wird. Entsprechend wird das zweite ternär quantisierte Ausgangssignal $S_2$ durch die zweite Kraftimpuls-Umwandlungseinheit 39 in Kraftimpulssignale (Spannungssignale) $S_5$, $S_6$ umgewandelt. Vorzugsweise können die ternär quantisierten Ausgangssignale $S_1$, $S_2$ jeweils die Werte 1, 0 und -1 annehmen.
Hat das Signal $S_1$ beispielsweise den Wert +1 so erzeugt die erste Kraftimpuls-Umwandlungseinheit aus dem Signal $S_1$ zwei Kraftimpulssignale $S_3$ und $S_4$, die einen Kraftimpuls hervorrufen. Diese Kraftimpulssignale $S_9$ und $S_4$ erzeugen zwischen der zweiten und vierten der Kraftgeberelektrode $40_2$, $40_4$ bzw. zwischen den Kraftgeberelektroden $40_2$, $40_4$ und dem Resonator 2 elektromagnetische Felder, über die die Kraftimpulse bewirkt werden. Hat das Signal $S_1$ den Wert -1, so werden die Kraftimpulssignale $S_3$ und $S_4$ so erzeugt, dass die Feldlinien der resultierenden elektromagnetischen Felder entgegengesetzt zu den Feldlinien im Fall $S_1 = 1$ verlaufen. Hat das Signal $S_1$ den Wert 0, liegt zwischen der zweiten und vierten Kraftgeberelektrode $40_2$, $40_4$ bzw. zwischen den Kraftgeberelektroden $40_2$, $40_4$ und dem Resonator 2 kein elektrisches Feld an.
Entsprechend der folgenden Tabelle werden also beispielsweise folgende Potenziale (0 bzw. $U_0$) an die zweite und vierte Kraftgeberelektrode $40_2$, $40_4$ angelegt:

| $S_1$ | $40_4$ | $40_2$ |
|---|---|---|
| -1 | 0 | $U_0$ |
| 0 | 0 | 0 |

(fortgesetzt)

| $S_1$ | $40_4$ | $40_2$ |
| --- | --- | --- |
| 1 | $U_0$ | 0 |

Entsprechende Überlegungen gelten auch für das zweite ternär quantisierte Ausgangssignal $S_2$, das durch die zweite Kraftimpulsumwandlungseinheit 39 in ein fünftes und sechstes Kraftimpulssignal $S_5$, $S_6$ umgewandelt wird, die an die erste und dritte Kraftgeberelektrode $40_1$, $40_3$ angelegt werden. Beispielsweise werden über die Kraftgeberelektroden $40_2$, $40_4$ die Parameter der Anregungsschwingung, und über die Kraftgeberelektroden $40_1$, $40_3$ die Parameter der Ausleseschwingung eingestellt/geregelt.

Durch das Anlegen elektrischer Felder an die Kraftgeberelektroden $40_1$, $40_4$ wird zusätzlich zur Anregung des Resonators 2 auch bewirkt, dass elektrische Ladung auf eine bewegliche Mittelelekrode fließt. Diese Ladung wird über den Ladungsverstärker 31 gemessen, ein entsprechendes analoges Ausgangssignal $S_7$ durch den Analog-Digital-Wandler 32 in ein entsprechendes digitales Signal $S_8$ umgewandelt, aus dem durch die Signaltrennung 33 ein erstes digitales Auslesesignal $S_9$ und ein zweites digitales Auslesesignal $S_{10}$ erzeugt wird. Da die auf die Mittelelektrode geflossene Ladung von den Kapazitäten derjenigen Kraftgeberelektroden $40_1$, $40_4$ abhängig ist, an denen momentan ein elektrisches Feld anliegt, ist die geflossene Ladung ein Maß für die Amplituden/Frequenzen/sonstige Parameter der Anregungsschwingung/Ausleseschwingung des Resonators 2. Daher kann durch die Signaltrennung 33 in Abhängigkeit momentaner und/oder zeitlich älterer Ausgangssignalwerte der ternär quantisierten Ausgangssignale $S_1$, $S_2$ die momentane Bewegung/Änderung der Bewegung des Resonators 2 rekonstruiert werden.

Vorteilhafterweise ist der zweidimensionale Pulsmodulator 37 so ausgelegt, dass sich die ternär quantisierten Ausgangssignale $S_1$ und $S_2$ niemals gleichzeitig ändern, da in der Regel die auf die Mittelelektrode fließende Ladung summarisch gemessen wird, d. h., dass Ladungsverschiebungen, die aus einer Überlagerung von zwei elektrischen Feldern resultieren, nur als Ganzes gemessen werden können, also nicht Teilen der Ladungsverschiebung einzelner elektrischen Felder zugeordnet werden kann. Die Zusatzbedingung zwischen den ternär quantisierten Ausgangssignalen $S_1$ und $S_2$ erlaubt es dann, eine eindeutige Zuordnung der geflossenen Ladung zu einem bestimmten elektrischen Feld zu erhalten, so dass genau zwischen Anregungsschwingung und Ausleseschwingung unterschieden werden kann. Eine weitere mögliche Bedingung in diesem Zusammenhang ist, festzulegen, dass zu einem bestimmten Zeitpunkt nur eines der beiden Signale $S_1$ und $S_2$ von Null verschiedene Werte annehmen darf.

Das erste digitale Auslesesignal $S_9$ wird durch den ersten Demodulator 34 in einen Realteil $S_{11}$ und einen Imaginärteil $S_{12}$ demoduliert. Analog hierzu wird das zweite digitale Auslesesignal $S_{10}$ durch den zweiten Demodulator 35 in einen Realteil $S_{13}$ und einen Imaginärteil $S_{14}$ domoduliert. Beispielsweise beinhaltet das erste digitale Auslesesignal $S_9$ Information über die Anregungsschwingung und das zweite digitale Auslesesignal $S_{10}$ Information über die Anregungsschwingung. Die Real- und Imaginärteile $S_{11}$ bis $S_{14}$ des ersten und zweiten digitalen Auslesesignals $S_9$, $S_{10}$ beaufschlagen das Regelsystem 36, das in Abhängigkeit dieser Signale Anregungs-/Kompensationssignale $S_{15}$ bis $S_{18}$ erzeugt. Beispielsweise stellt das Signal $S_{15}$ den Realteil und das Signal $S_{16}$ den Imaginärteil des digitalen Anregungs-/Kompensationssignals für die Anregungsschwingung dar, wohingegen das Signal $S_{17}$ den Realteil und das Signal $S_{18}$ den Imaginärteil eines digitalen Anregungs- /Kompensationssignals für die Ausleseschwingung darstellt.

Die digitalen Anregungs-/Kompensationssignale $S_{15}$ bis $S_{18}$ werden dem zweidimensionalen Pulsmodulator 37 zugeführt, der daraus die ternär quantisierten Ausgangssignale $S_1$, $S_2$ erzeugt.

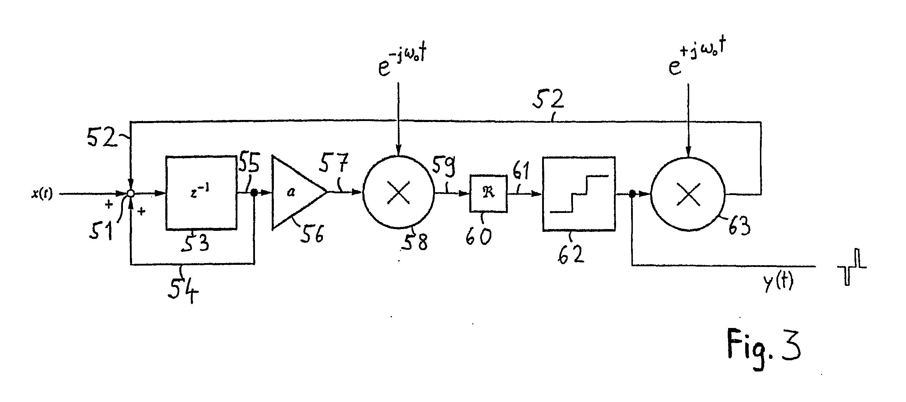

Fig. 3 zeigt ein Blockschaltbild des erfindungsgemäßen Pulsmodulators in komplexer Darstellung. Das komplexe Eingangssignal x(t) umfasst einen Realteil sowie einen Imaginärteil, welche beide als digitale Werte repräsentiert werden. Im Addiererknoten 51 wird von dem komplexen Eingangssignal x(t) das komplexe Rückkopplungssignal 52 subtrahiert, wobei die Differenz dieser beiden komplexen Signale die Regelabweichung darstellt. Außerdem wird im Addiererknoten 51 der (ebenfalls komplexe) Inhalt des Verzögerungsglieds 53 zu dieser Differenz dazu addiert. Der Inhalt des Verzögerungsglieds 53 wird über die Signalleitung 54 zum Addiererknoten 51 geführt. Das Verzögerungsglied 53 bildet mit der Signalleitung 54 zusammen eine komplexe Integratorstufe, welche die komplexe Regelabweichung, also die Differenz von Eingangssignal und Rückkopplungssignal aufintegriert. Das aufintegrierte Signal 55 wird in der Verstärkerstufe 56 entsprechend dem Faktor "a" verstärkt, und das verstärkte Signal 57 wird der ersten Multipliziererstufe 58 zugeführt. Dort wird das verstärkte Signal 57 mit dem komplexen Mischsignal $e^{-j\omega_0 t}$ multipliziert, um so das auf die Frequenz $\omega_0$ heraufgemischte Signal 59 zu erhalten. Der Block 60 ermittelt den Realteil des komplexen heraufgemischten Signals 59, und der so erhaltene Realteil 61 des heraufgemischten Signals wird dem Quantisierer 62 zur Verfügung gestellt.

Bei der in Fig. 3 gezeigten Ausführungsform ist der Quantisierer 62 als ternärer Quantisierer ausgeführt, welcher das jeweilige Eingangssignal mit Hilfe von Komparatoren in die drei möglichen Werte -1, 0, +1 eines Pulssignals umsetzt. Das auf diese Weise erzeugte quantisierte Pulssignal y(t) kann am Ausgang des Quantisierers 62 abgegriffen werden. Zur Erzeugung des komplexen Rückkopplungssignals 52 wird das reellwertige Pulssignal y(t) in der zweiten Multipliziererstufe 63 mit dem konjugiert komplexen Mischsigna, $e^{+j\omega_0 t}$ multipliziert. Das auf diese Weise durch Multiplikation einer reellen und einer komplexen Zahl erhaltene komplexe Rückkopplungssignal 52 wird dem Addiererknoten 51 am Eingang der Schaltung zugeführt.

Die in Fig. 3 dargestellte Abfolge von funktionalen Einheiten lässt sich mittels eines digitalen Signalprozessors (DSP) oder aber mittels einer speziell hierfür vorgesehenen Hardware implementieren. Die digitale Signalverarbeitung muss dabei mit einer Abtastfrequenz $\omega_A$ durchgeführt werden, welche deutlich höher ist als die Frequenz $\omega_0$ des komplexen Mischsignals. Beispielsweise kann als Abtastrate $\omega_A$ das 2- bis 1000-fache der Mischfrequenz $\omega_0$ verwendet werden.

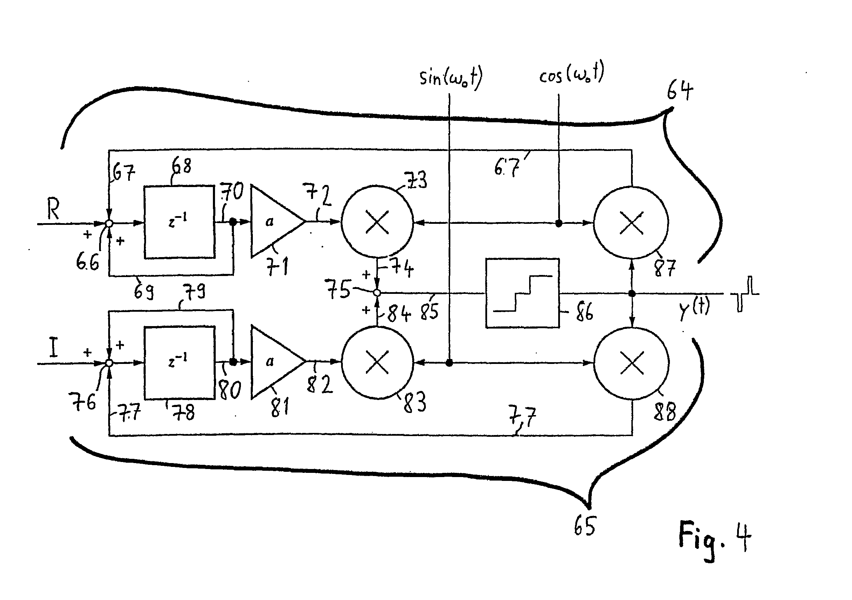

In Fig. 4 ist der Pulsmodulator von Fig. 3 noch einmal dargestellt, wobei hier der Inphase-Signalpfad und der Quadratur-Signalpfad separat eingezeichnet sind. Die obere Hälfte von Fig. 4 stellt den Inphase-Signalpfad 64 dar, der den Realteil R des Eingangssignals x(t) verarbeitet. Die untere Hälfte von Fig. 4 zeigt den Quadratur-Signalpfad 65 zur Verarbeitung des Imaginärteils I des Eingangssignals. Im Addiererknoten 66 des Inphase-Signalpfads wird der Realteil der Regelabweichung als Differenz des Realteils R des Eingangssignals und des Realteils 67 des Rückkopplungssignals ermittelt. Zu dieser Regelabweichung wird der bisher im Verzögerungsglied 68 gespeicherte Integratorwert addiert, der über die Signalleitung 69 dem Addiererknoten 66 zugeführt wird. Das Verzögerungsglied 68 bildet zusammen mit der Signalleitung 69 einen Integrator mit der Übertragungsfunktion $H(z) = \dfrac{1}{1-z^{-1}}$. Durch Addition des Realteils der Regelabweichung zu dem bisherigen Integratorwert wird ein neuer Integratorwert erhalten, der wiederum im Verzögerungsglied 68 gespeichert wird. Das aufintegrierte Signal 70 des Inphase-Signalpfads wird durch den Verstärker 71 mit dem Faktor "a" skaliert, und gelangt, als verstärktes Signal 72, zum ersten Multiplizierer 73. Der erste Multiplizierer 73 multipliziert das reellwertige verstärkte Signal 72 mit dem reellen Signal $\cos(\omega_0 t)$, also mit dem Realteil von $e^{-j\omega_0 t}$. Der erste Multiplizierer 73 ermittelt das Produkt $R \cdot \cos(\omega_0 t)$, welches als Signal 74 dem Addierer 75 zugeführt wird.

Der Quadratur-Signalpfad 65 des Pulsmodulators umfasst einen Addiererknoten 76, in dem die Differenz des Imaginärteils I des Eingangssignals und des Imaginärteils 77 des Rückkopplungssignals berechnet wird. Diese Differenz, die dem Imaginärteil der Regelabweichung entspricht, wird zu dem bisherigen Inhalt des Verzögerungsglieds 78 addiert, der dem Addiererknoten 76 über die Signalleitung 79 zugeführt wird. Der als Summe des bisherigen Werts und des Imaginärteils der Regelabweichung erhaltene neue Wert wird in das Verzögerungsglied 78 eingeschrieben. Das Verzögerungsglied 78 bildet zusammen mit der Signalsleitung 79 einen Integrator mit der Übertragungsfunktion

$H(z) = \dfrac{1}{1-z^{-1}}$. Am Ausgang dieses Integrators erhält man das aufintegrierte Signal 80 des Quadratur-Signalpfads, welches durch den Verstärker 81 mit dem Faktor "a" skaliert wird. Das so erhaltene verstärkte Signal 82 des Quadratur-Signalpfads wird anschließend im zweiten Multiplizierer 83 mit dem Signal $\sin(\omega_0 t)$ multipliziert. Das so erhaltene Produkt $I \cdot \sin(\omega_0 t)$ wird, als Signal 84, dem Addierer 75 zugeführt. Der Addierer 75 addiert die Signale $R \cdot \cos(\omega_0 t)$ und $R \cdot \cos(\omega_0 t)$ und erzeugt an seinem Ausgang das Signal $R \cdot \cos(\omega_0 t) + I \cdot \sin(\omega_0 t)$ als Signal 85. Dieses Signal 85 entspricht aber genau dem Realteil des heraufgemischten Signals, denn die komplexe Multiplikation von x(t) und $e^{-j\omega_0 t}$ liefert:

$$x(t) \cdot e^{-j\omega_0 t} =$$
$$= (R + j \cdot I) \cdot (\cos(\omega_0 t) - j \cdot \sin(\omega_0 t)) =$$
$$= [R \cdot \cos(\omega_0 t) + I \cdot \sin(\omega_0 t)] + j \cdot [I \cdot \cos(\omega_0 t) - R \cdot \sin(\omega_0 t)]$$

und der Realteil dieses Signals ergibt sich zu $R \cdot \cos(\omega_0 t) + I \cdot \sin(\omega_0 t)$. Daher stellt das Signal 85 den Realteil des komplexwertigen heraufgemischten Signals dar und entspricht insofern dem in Fig. 3 dargestellten Signal 61.

Das digitale reellwertige Signal 85 wird dem Quantisierer 86 zugeführt, der dieses Eingangssignal in das quantisierte Pulssignal y(t) umsetzt. Der im Beispiel von Fig. 3 und Fig. 4 gezeigte dreistufige (ternäre) Quantisierer quantisiert das Eingangssignal entsprechend $y(t) \in \{-1; 0; +1\}$. Hierzu weist der Quantisierer 86 Komparatoren auf, die den Signalpegel des Signals 85 ständig mit vorgegebenen Schwellwerten vergleichen. Entsprechend dem Ergebnis dieser Vergleiche wird dem Ausgangssignal y(t) jeweils einer der Werte -1; 0; +1 als aktueller Signalwert zugewiesen. Anstelle der dreistufigen (ternären) Quantisierung können in Abhängigkeit vom Einsatzzweck beliebige andere Quantisierungen zum Einsatz kommen, z. B. zweistufige (binäre) oder mehrstufige Quantisierungen.

Aus dem quantisierten Pulssignal y(t) werden der Realteil 67 sowie der Imaginärteil 77 des komplexwertigen Rückkopplungssignals abgeleitet. Dazu wird das Pulssignal y(t) mit dem konjugiert komplexen Mischsignal $e^{+j\omega_0 t}$ multipliziert:

$$y(t) \cdot e^{j\omega_0 t} = y(t) \cdot \cos(\omega_0 t) + j \cdot y(t) \cdot \sin(\omega_0 t)$$

Der Realteil y(t)·cos($\omega_0$t) des komplexwertigen Rückkopplungssignals wird vom dritten Multiplizierer 87 erzeugt, der das Pulssignal y(t) mit dem cos($\omega_0$t) multipliziert. Am Ausgang des dritten Multiplizierers 87 erhält man daher den Realteil 67 des Rückkopplungssignals, der zum Addiererknoten 66 zurückgeführt wird. Um den Imaginärteil y(t)·sin($\omega_0$t) des komplexen Rückkopplungssignals zu erzeugen, wird im vierten Multiplizierer 88 das Pulssignal y(t) mit sin($\omega_0$t) multipliziert. Am Ausgang des vierten Multiplizierers 88 erhält man den Imaginärteil 77 des Rückkopplungssignals, der zum Addiererknoten 76 zurückgeführt wird.

In den Ausführungsbeispielen der Fig. 3 und 4 sind eingangsseitig Integratoren vorgesehen, die die Regelabweichung zwischen Eingangssignal und Rückkopplungssignal aufsummieren und so ein aufintegriertes Signal erzeugen.

Die Übertragungsfunktion H(z) eines Integrators kann geschrieben werden als $H(z) = \dfrac{1}{1 - z^{-1}}$. Anstelle der Integratoren können eingangsseitig auch andere Signalumformungsstufen mit anderen Übertragungsfunktionen H(z) eingesetzt werden. Beispielsweise könnten Übertragungsfunktionen H(z) von höherer Ordnung verwendet werden, wobei jedoch

$$\lim_{z \to 1} H(z) = \infty$$

gelten sollte. Die Übertragungsfunktion H(z) sollte also für den Fall, dass sich die Frequenz $\omega$ dem Wert Null (z-> 1) annähert, gegen Unendlich gehen. Die zusätzlichen freien Parameter von H(z) können dazu verwendet werden, bestimmte Eigenschaften des Modulators (z. B. das Signal-Rausch-Verhältnis) oder des Gesamtsystems zu optimieren.

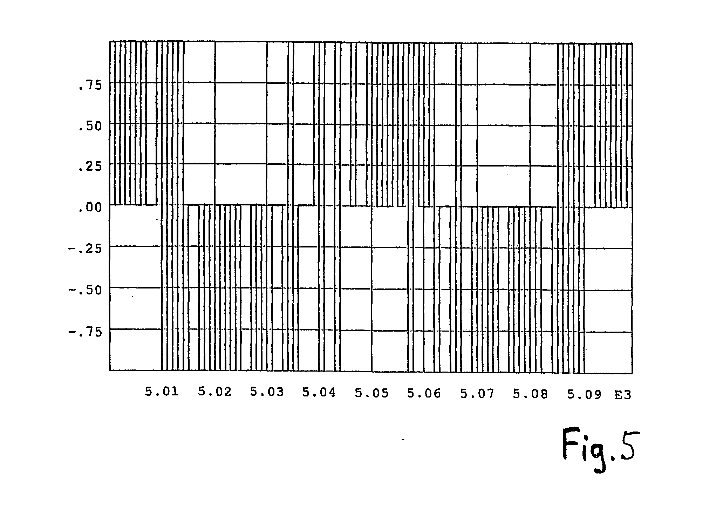

In Fig. 5 ist der zeitliche Verlauf des am Ausgang des Quantisierers abgreifbaren Pulssignals y(t) für den Fall einer ternären Quantisierung mit y(t)$\in$ {-1;0;+1} dargestellt, welcher mit Hilfe einer Computersimulation ermittelt wurde. Dabei wurde der Realteil R des komplexen Eingangssignals auf 0,3 gesetzt, während der Imaginärteil I des Eingangssignals gleich Null gesetzt wurde. Das Eingangssignal x(t) ist daher konstant und variiert nicht als Funktion der Zeit. Die Abtastfrequenz $\omega_A$ ist fünfmal so hoch wie die Mischfrequenz, $\omega_0/\omega_A$=0,2. Auf der Abszisse sind die Takte der Abtastfrequenz $\omega_A$ dargestellt, die von 5000 bis 5100 durchnummeriert sind. Während jedes Takts nimmt das Pulssignal y(t) einen der drei möglichen Werte -1; 0; +1 an. Der jeweilige Wert von y(t) während eines bestimmten Takts der Abtastfrequenz ist in Richtung der Ordinate aufgetragen.

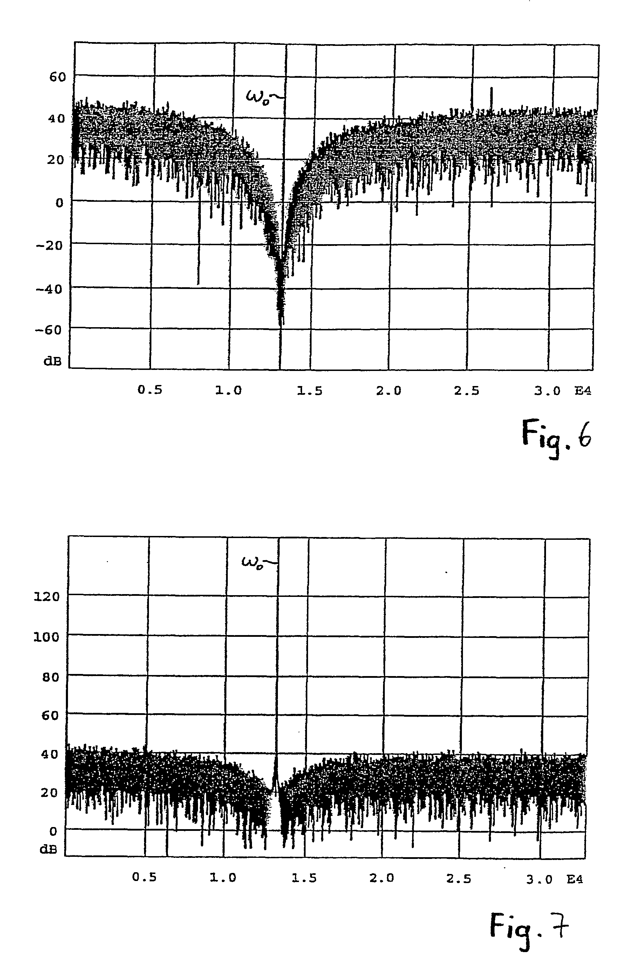

Wenn man eine Spektralanalyse (FFT) des in Fig. 5 dargestellten Pulssignals durchführt, erhält man das in Fig. 6 gezeigte Spektrum. Auf der Abszisse ist die Frequenz der jeweiligen spektralen Komponenten in willkürlichen FFT-Einheiten angegeben, während in Richtung der Ordinate die Signalintensität in dB aufgetragen ist. Bei der Frequenz $\omega_0$ ist ein Peak der spektralen Verteilung zu erkennen. Außerdem lässt sich feststellen, dass der Rauschpegel in der Umgebung der Frequenz $\omega_0$ deutlich niedriger ist als im restlichen Teil des Spektrums. Bei einem klassischen Sigma-Delta-Modulator wäre der Rauschpegel dagegen bei niedrigen Frequenzen deutlich vermindert, also in der Nähe der Frequenz $\omega$=0. Bei dem erfindungsgemäßen Pulsmodulator wird das aufintegrierte und verstärkte Signal mittels einer komplexen Multiplikation auf die Mischfrequenz $\omega_0$ heraufgemischt. Dadurch wird auch der Spektralbereich, in dem das Rauschen verringert ist, zur Mischfrequenz $\omega_0$ hin verlagert, und deshalb erhält man die in Fig. 6 gezeigte Rauschcharakteristik.

Der erfindungsgemäße Pulsmodulator kann zur digitalen Synthese eines Pulssignals verwendet werden, wobei die spektrale Hauptkomponente des Impulssignals durch die Mischfrequenz $\omega_0$ vorgegeben werden kann. Über das Verhältnis von Realteil zu Imaginärteil des Eingangssignals kann die Phasenlage des erzeugten Pulssignals exakt eingestellt werden, und man erhält ein phasenstabiles Pulssignal. Bei Verwendung des erfindungsgemäßen Pulsmodulators zur Frequenzsynthese sollte das Pulssignal y(t) mittels eines elektrischen Bandfilters gefiltert werden, dessen Durchlassbereich um die Frequenz $\omega_0$ zentriert ist. Mit Hilfe dieses Bandpasses, der beispielsweise als Quarz- bzw. Keramikfilter ausgeführt sein kann, können weiter von $\omega_0$ entfernte Spektralbereiche unterdrückt werden, in denen der Rauschpegel unerwünscht hoch ist. Mittels eines derartigen Bandpasses lässt sich das Signal-Rausch-Verhältnis signifikant verbessern.

Der erfindungsgemäße Pulsmodulator eignet sich unter anderem dazu, elektromechanische Schwinger zu harmonischen Schwingungen anzuregen. Insbesondere mittels eines ternär quantisierten Pulssignals, welches an die Anregungselektroden eines mikromechanischen Resonators angelegt wird, können die für die Schwingungsanregung erforderlichen elektrostatischen Kräfte erzeugt werden. Die Frequenz $\omega_0$ des Pulssignals y(t) wird dabei bevorzugterweise gleich der Resonanzfrequenz des mikromechanischen Schwingers gewählt. Wenn das in Fig. 5 und Fig. 6 dargestellte Pulssignal zur harmonischen Anregung eines Schwingers hoher Güte (beispielsweise der Güte $10^4$) verwendet wird, dessen Resonanzfrequenz der Anregungsfrequenz $\omega_0$ entspricht, dann wird der überwiegende Teil des Quantisierungsrauschens vom Schwinger selbst weggefiltert. Insbesondere das Quantisierungsrauschen in weiter von der Resonanzfrequenz $\omega_0$ entfernten Spektralbereichen wird durch den Schwinger selbst unterdrückt. Das so erhaltene gefilterte Spektrum ist in Fig. 7 gezeigt.

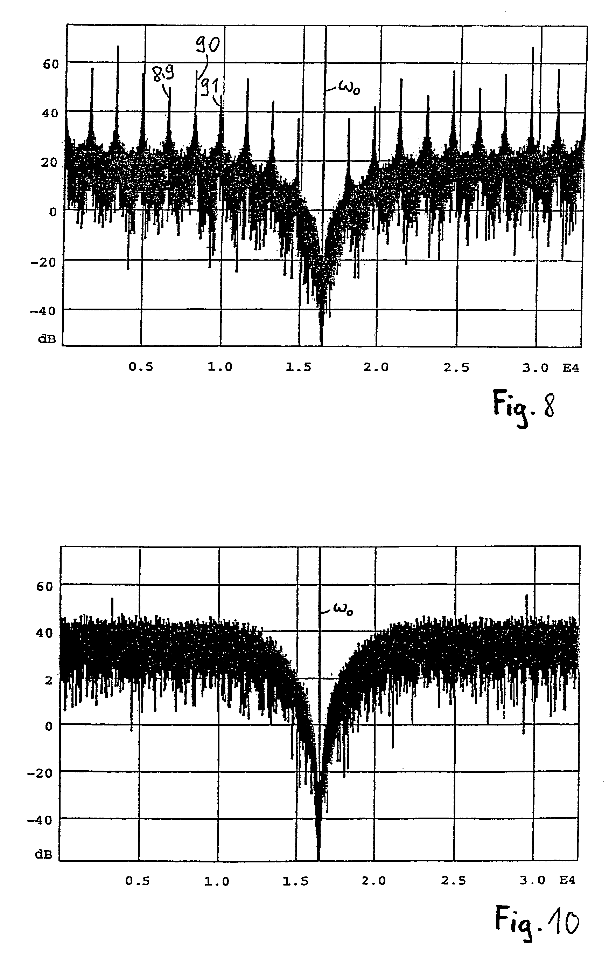

Es gibt bestimmte Verhältnisse der Frequenzen ($\omega_0/\omega_A$, bei denen sich das rauschartige Quantisierungsprodukt in y(t) in eine Reihe von mehr oder weniger periodischen Funktionen wandelt. Als Beispiel hierzu ist in Fig. 8 ein Frequenzspektrum gezeigt, welches für das Verhältnis $\omega_0/\omega_A = 0{,}25$ erhalten wurde. Neben dem Peak bei der Frequenz $\omega_0$ sind eine Reihe von Spektrallinien 89, 90, 91, etc. erkennbar. Die Ursache für das Entstehen dieser Spektrallinien ist, dass der Quantisierer ein stark nicht-lineares Glied des Regelkreises ist, denn dadurch werden im Regelkreis bei bestimmten Frequenzverhältnissen Kippschwingungen angeregt. Dieses Verhalten des Regelkreises ist von klassischen Delta-Sigma-Wandlern her bekannt.

Um das Entstehen der Kippschwingungen zu verhindern, kann man die mittlere Linearität des Quantisierers verbessern, indem ein Rauschsignal zum Eingangssignal des Quantisierers addiert wird. Vorzugsweise wird hierzu ein spektral gleichverteiltes Rauschsignal verwendet. Fig. 9 zeigt das Blockschaltbild eines entsprechend modifizierten Pulsmodulators. Gegenüber dem in Fig. 4 gezeigten Blockschaltbild umfasst der in Fig. 9 gezeigte Pulsmodulator zusätzlich einen Rauschgenerator 92, der ein Rauschsignal 93 erzeugt. Außerdem sind die in Fig. 4 gezeigten Integratoren verallgemeinert als Signalumwandlungsstufen 94, 95 mit der Überfunktion H(z) dargestellt. Ansonsten stimmen die in Fig. 9 gezeigten Baugruppen mit den Elementen des Blockschaltbilds von Fig. 4 überein. Das Rauschsignal 93 wird dem Addierer 75 zugeführt und dort zu den Signalen 74 und 84 addiert. Das Signal 85 am Eingang des Quantisierers 86 ist deshalb von einem Rauschsignal überlagert, und dies führt letztlich zu einer statistischen Rundung bei der Quantisierung. In Fig. 10 ist das Frequenzspektrum eines Pulssignals y(t) gezeigt, das mit Hilfe eines gemäß Fig. 9 modifizierten Pulsmodulators erzeugt wurde. Obwohl das Frequenzverhältnis $\omega_0/\omega_A$ wieder gleich 0,25 ist, kommt es nicht zur Ausbildung von Kippschwingungen.

Der erfindungsgemäße Pulsmodulator lässt sich insbesondere zur elektrostatischen Anregung von mikromechanischen Schwingern verwenden. Hierzu kann beispielsweise ein ternär quantisiertes Pulssignal der in Fig. 5 gezeigten Art mit den Anregungselektroden eines mikromechanischen Resonators verbunden werden. Das in Fig. 5 gezeigte Pulssignal repräsentiert ein sinusoidales Signal der Frequenz $\omega_0$. Mit einem derartigen Pulssignal kann daher ein mikromechanischer Resonator zu harmonischen Schwingungen der Frequenz $\omega_0$ angeregt werden, und zwar insbesondere dann, wenn die Frequenz $\omega_0$ des Pulssignals zumindest ungefähr der Resonanzfrequenz des Schwingers entspricht.

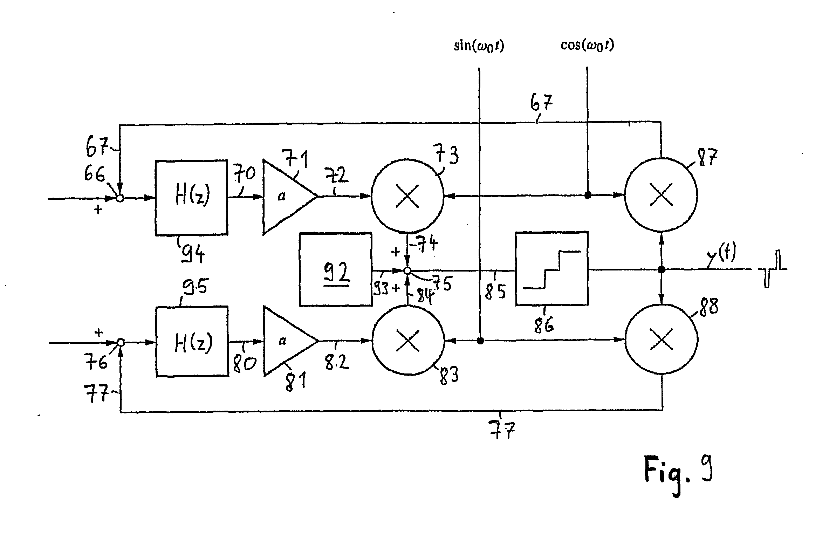

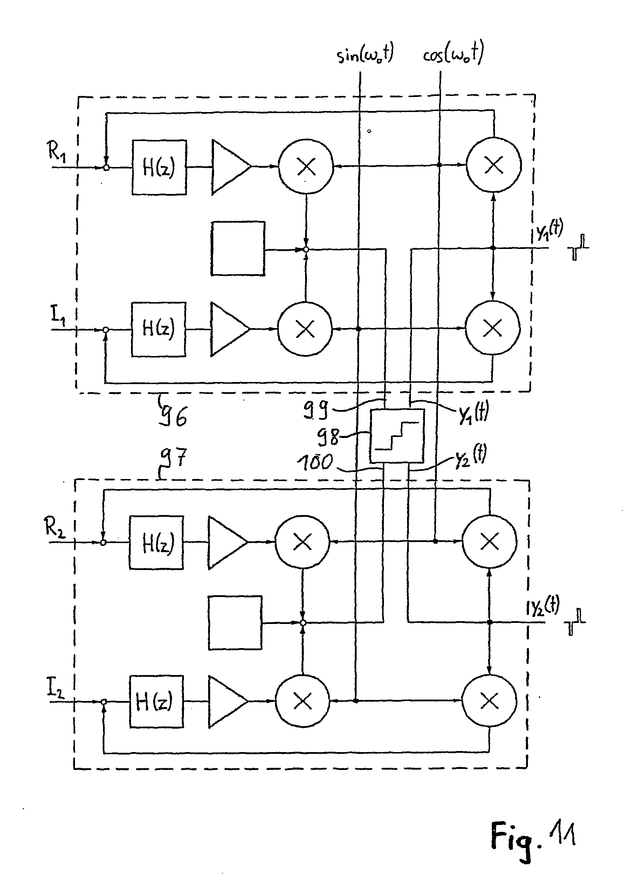

Für die Anwendung in Drehratensensoren bzw. Coriolis-Kreiseln werden Resonatoren verwendet, die in zwei zueinander senkrechten Richtungen $y_1$ und $y_2$ schwingen können. Zur elektrostatischen Anregung eines Resonators mit zwei Freiheitsgraden kann vorzugsweise der in Fig. 11 gezeigte zweidimensionale Pulsmodulator verwendet werden. Der zweidimensionale Pulsmodulator umfasst einen ersten Pulsmodulator 96, der aus dem komplexen Eingangssignal $R_1$, $I_1$ das Pulssignal $y_1(t)$ erzeugt, das zur Anregung des Resonators in $y_1$-Richtung dient. Mit dem zweiten Pulsmodulator 97 wird aus dem komplexen Eingangssignal $R_2$, $I_2$ das Pulssignal $y_2(t)$ erzeugt, mit dem der Schwinger zu Schwingungen in $y_2$-Richtung angeregt wird. Sowohl beim ersten Pulsmodulator 96 als auch beim zweiten Pulsmodulator 97 handelt es sich um einen Pulsmodulator mit statistischer Rundung gemäß Fig. 9. Eine Darstellung des Aufbaus und der Funktionsweise des ersten und des zweiten Pulsmodulators 96, 97 kann deshalb der Figurenbeschreibung zu den Fig. 4 und 9 entnommen werden. Allerdings weist der in Fig. 11 gezeigte zweidimensionale Pulsmodulator einen für beide Kanäle gemeinsamen 2D-Quantisierer 98 auf, der das Signal 99 des ersten Pulsmodulators 96 in das quantisierte Pulssignal $y_1(t)$ umwandelt, und der das Signal 100 des zweiten Pulsmodulators 97 in das quantisierte Pulssignal $y_2(t)$ transformiert. Der Einsatz eines für beide Kanäle gemeinsamen 2D-Quantisierers 98 gestattet es, bei der Quantisierung der Signale 99, 100 Zusatzbedingungen zu berücksichtigen, die für den Betrieb des mikromechanischen Sensors von Vorteil sind. Eine derartige Zusatzbedingung ist beispielsweise, dass jeweils nur einer der Kanäle von Null verschiedene Impulse liefern darf. Eine andere denkbare Zusatzbedingung ist, dass sich zu einem gegebenen Zeitpunkt jeweils nur eines der Ausgangssignale $y_1(t)$, $y_2(t)$ ändern darf. Derartige Zusatzbedingungen können dann sinnvoll sein, wenn die auf die Elektroden eines Doppelresonators aufgebrachten Verschiebungsströme summarisch gemessen werden, um auf die Auslenkung des Schwingers rückschließen zu können. Mit Hilfe der Zusatzbedingungen wird eine eindeutige Zuordnung eines Verschiebungsstroms zu einer bestimmten Elektrode ermöglicht. Dadurch lässt sich eine Signaltrennung der von der $y_1$-Auslenkung und der $y_2$-Auslenkung des Schwingers verursachten Signale durchführen.

Alle oben beschriebenen Ausführungsformen des erfindungsgemäßen Pulsmodulators lassen sich zur Realisierung des erfindungsgemäßen Verfahrens verwenden. Eventuell müssen diese miteinander kombiniert werden. Der in Fig. 11 beschriebene Pulsmodulator (2-dimensional) kann "direkt" übernommen werden, es lassen sich auch Kombinationen aus zwei eindimensionalen Pulsmodulatoren verwenden. Auch ist es möglich, auf die Addition des zusätzlichen Rauschsignals zu verzichten.

**Patentansprüche**

1. Betriebsverfahren für einen Corioliskreisel (1), bei dem

   - digitale Auslesesignale ($S_9$, $S_{10}$) erzeugt werden, die ein Maß für die momentanen Amplituden/Frequenzen der Anregungsschwingung/Ausleseschwingung des Resonators (2) des Corioliskreisels (1) darstellen, und
   - der Resonator (2) mit Kraftsignalen ($S_3$ - $S_6$) beaufschlagt wird, wobei die Kraftsignale ($S_3$- $S_6$) in Abhängigkeit der digitalen Auslesesignale ($S_9$, $S_{10}$) so geregelt werden, dass die Anregungsschwingung/Ausleseschwingung bestimmte Amplituden/Frequenzen annehmen,

   **dadurch gekennzeichnet,**
   **dass** die Kraftsignale ($S_3$ - $S_6$) aus quantisierten Ausgangssignalen ($S_1$ - $S_2$) eines Pulsmodulators (37) erzeugt werden, der mit digitalen Anregungs-/Kompensationssignalen ($S_{15}$ - $S_{18}$), die aus den digitalen Auslesesignalen ($S_9$, $S_{10}$) abgeleitet werden, gespeist wird.

2. Verfahren nach Anspruch 1, **dadurch gekennzeichnet, dass** die Ausgangssignale ($S_1$ - $S_2$) des Pulsmodulators (37) ternär quantisiert sind.

3. Verfahren nach Anspruch 2, **dadurch gekennzeichnet, dass** durch den Pulsmodulator (37) ein erstes und ein zweites jeweils ternär quantisiertes Ausgangssignal ($S_1$ - $S_2$) erzeugt wird, wobei das erste Ausgangssignal ($S_1$) in eine erste Folge von ternär quantisierten Kraftimpulsen ($S_3$, $S_4$) transformiert wird, und das zweite Ausgangssignal ($S_2$) in eine zweite Folge von ternär quantisierten Kraftimpulsen ($S_5$, $S_6$) transformiert wird, wobei die erste Folge von Kraftimpulsen derjenige Teil der Kraftsignale ist, der zur Einstellung gewünschter Amplituden/Frequenzen der Anregungsschwingung dient, und die zweite Folge von Kraftimpulsen derjenige Teil der Kraftsignale ist, der zur Einstellung gewünschter Amplituden/Frequenzen der Ausleseschwingung dient.

4. Verfahren nach einem der vorstehenden Ansprüche, **dadurch gekennzeichnet, dass** die Erzeugung der digitalen Auslesesignale ($S_9$, $S_{10}$) **dadurch** erfolgt, indem

   - eine Menge an elektrischer Ladung, die aufgrund elektrischer Felder, die durch die Kraftsignale erzeugt werden, auf eine bewegliche Mittelelektrode fließt, mittels eines Ladungsverstärkers (31) gemessen wird,
   - ein entsprechendes analoges Ausgangssignal ($S_7$) des Ladungsverstärkers (31) in ein digitales Ausgangssignal ($S_8$) umgewandelt wird, und
   - über eine Signaltrennung (33) in Abhängigkeit momentaner und/oder zeitlich älterer Ausgangssignalwerte ($S_1$, $S_2$) des Pulsmodulators (37) aus dem Ausgangssignal des Ladungsverstärkers (38) die digitalen Auslesesignale ($S_9$, $S_{10}$) ermittelt werden.

5. Verfahren nach einem der vorstehenden Ansprüche, **dadurch gekennzeichnet, dass** die digitalen Auslesesignale ($S_9$, $S_{10}$) mittels eines Demodulationsprozesses jeweils in eine Normal- und eine Quadraturkomponente ($S_{11}$-$S_{14}$) zerlegt werden.

6. Verfahren nach Anspruch 5, **dadurch gekennzeichnet, dass** mittels eines Regelungsprozesses (36) aus den Normal- und Quadraturkomponenten ($S_{11}$ - $S_{14}$) der digitalen Auslesesignale Normal- und Quadraturkomponenten der digitalen Anregungs-/Kompensationssignale ($S_{15}$ - $S_{18}$) erzeugt werden, die den Pulsmodulator (37) speisen.

7. Auswerte-/Regelelektronik (30) zur Verwendung in einem Corioliskreisel (1), mit:

   - einer Einheit (31, 32, 33) zur Erzeugung von digitalen Auslesesignalen ($S_9$, $S_{10}$), die ein Maß für die momentanen Amplituden/Frequenzen der Anregungsschwingung/Ausleseschwingung des Resonators (2) des Corioliskreisels (1) darstellen,
   - wenigstens einem Regelkreis (31 - 37), durch den in Abhängigkeit der digitalen Auslesesignale ($S_9$, $S_{10}$) Kraftsignale ($S_3$ - $S_6$) erzeugt und auf den Resonator (2) gegeben werden, wobei die Kraftsignale ($S_3$ - $S_6$) so geregelt werden, dass die Anregungsschwingung/Ausleseschwingung bestimmte Amplituden/Frequenzen annehmen,

   **gekennzeichnet durch**

   - einen Pulsmodulator (37), der ein Teil des Regelkreises (31 - 37) ist, und der mit digitalen Anregungs-/

Kompensationssignalen ($S_{15}$ - $S_{18}$), die aus den digitalen Auslesesignalen ($S_9$, $S_{10}$) abgeleitet werden, gespeist wird, wobei aus quantisierten Ausgangssignalen ($S_1$, $S_2$) des Pulsmodulators (37) die Kraftsignale erzeugbar sind.

**8.** Pulsmodulator zur Umwandlung eines komplexen Eingangssignals (x(t)) in ein Pulssignal (y(t)), **gekennzeichnet durch**

- eine Subtrahiererstufe (51), die aus der Differenz des komplexen Eingangssignals (x(t)) und eines Rückkopplungssignals (52) ein Regelabweichungssignal erzeugt;
- eine Signalumwandlungsstufe, die das Regelabweichungssignal in ein Regelsignal (57) umwandelt;
- eine erste Multipliziererstufe (8), die das Regelsignal (57) mit einem mit der Frequenz $\omega_0$ oszillierenden komplexen Mischsignal multipliziert und so mindestens einen von Realteil (61) und Imaginärteil eines um $\omega_0$ heraufgemischten Regelsignals erzeugt;
- eine Quantisierungsstufe (62), die mindestens einen von Realteil und Imaginärteil des um $\omega_0$ heraufgemischten Regelsignals quantisiert und so das Pulssignal (y(t)) erzeugt;
- eine Rückkopplungseinheit, welche ausgehend von dem Pulssignal (y(t)) das Rückkopplungssignal (52) für die Subtrahiererstufe erzeugt.

**Claims**

**1.** An operating method for a Coriolis gyro (1) in which

- digital read signals ($S_9$, $S_{10}$) are produced, which represent a measure of the instantaneous amplitudes/ frequencies of the stimulation oscillation/read oscillation of the resonator (2) of the Coriolis gyro (1), and
- the resonator (2) has force signals ($S_3$ - $S_6$) applied to it, with the force signals ($S_3$ - $S_6$) being controlled as a function of the digital read signals ($S_9$, $S_{10}$) such that the stimulation oscillation/read oscillation assume specific amplitudes/frequencies,

**characterized**
**in that** the force signals ($S_3$ - $S_6$) are produced from quantized output signals ($S_1$ - $S_2$) from a pulse modulator (37) which is fed with digital stimulation/compensation signals ($S_{15}$ - $S_{18}$) which are derived from the digital read signals ($S_9$, $S_{10}$).

**2.** The method as claimed in claim 1, **characterized in that** the output signals ($S_1$ - $S_2$) from the pulse modulator (37) are ternary-quantized.

**3.** The method as claimed in claim 2, **characterized in that** the pulse modulator (37) produces a first and a second output signal ($S_1$ - $S_2$) which are each ternary-quantized, with the first output signal ($S_1$) being transformed to a first sequence of ternary-quantized force pulses ($S_3$, $S_4$), and the second output signal ($S_2$) being transformed to a second sequence of ternary-quantized force pulses ($S_5$, $S_6$), with the first sequence of force pulses being that part of the force signals which is used for setting desired amplitudes/frequencies of the stimulation oscillation, and the second sequence of force pulses being that part of the force signals which is used for setting desired amplitudes/ frequencies of the read oscillation.

**4.** The method as claimed in one of the preceding claims, **characterized in that** the digital read signals ($S_9$, $S_{10}$) are produced in such a way that

- an amount of electrical charge which flows to a moving center electrode on the basis of electrical fields which are produced by the force signals is measured by means of a charge amplifier (31),
- a corresponding analog output signal ($S_7$) from the charge amplifier (31) is converted to a digital output signal ($S_8$), and
- the digital read signals ($S_9$, $S_{10}$) are determined from the output signal from the charge amplifier (38) via signal separation (33), as a function of instantaneous and/or older output signal values ($S_1$, $S_2$) from the pulse modulator (37).

**5.** The method as claimed in one of the preceding claims, **characterized in that** the digital read signals ($S_9$, $S_{10}$) are in each case subdivided by means of a demodulation process into a normal and a quadrature component ($S_{11}$ - $S_{14}$).

6. The method as claimed in claim 5, **characterized in that** normal and quadrature components of the digital stimulation/compensation signals ($S_{15}$ - $S_{18}$) are produced by means of a control process (36) from the normal and quadrature components ($S_{11}$ - $S_{14}$) of the digital read signals and are fed to the pulse modulator (37).

7. Evaluation/control electronics (30) for use in a Coriolis gyro (1), having:

   - a unit (31, 32, 33) for production of digital read signals ($S_9$, $S_{10}$) which represent a measure of the instantaneous amplitudes/frequencies of the stimulation oscillation/read oscillation of the resonator (2) of the Coriolis gyro (1),
   - at least one control loop (31 - 37) by means of which force signals ($S_3$ - $S_6$) are produced as a function of the digital read signals ($S_9$, $S_{10}$) and are passed to the resonator (2), with the force signals ($S_3$ - $S_6$) being controlled such that the stimulation oscillation/read oscillation assume specific amplitudes/frequencies,

   **characterized by**

   - a pulse modulator (37) which is a part of the control loop (31 - 37) and which is fed with digital stimulation/compensation signals ($S_{15}$- $S_{18}$) which are derived from the digital read signals ($S_9$, $S_{10}$), in which case the force signals can be produced from quantized output signals ($S_1$, $S_2$) from the pulse modulator (37).

8. A pulse modulator for conversion of a complex input signal (x(t)) to a pulsed signal (y(t)),
   **characterized by**

   - a subtraction stage (51) which produces a control error signal from the difference between the complex input signal (x(t)) and a feedback signal (52);
   - a signal conversion stage, which converts the control error signal to a control signal (57);
   - a first multiplication stage (8), which multiplies the control signal (57) by a complex mixing signal oscillating at the frequency $\omega_0$, and thus produces at least one of the real part (61) and imaginary part of a control signal up-mixed by $\omega_0$;
   - a quantization stage (62), which quantizes at least one of the real part and imaginary part of the control signal up-mixed by $\omega_0$ and thus produces the pulsed signal (y(t));
   - a feedback unit, which uses the pulsed signal (y(t)) to produce the feedback signal (52) for the subtraction stage.


**Revendications**

1. Procédé de fonctionnement pour un gyroscope vibrant (1), dans lequel

   - des signaux de lecture ($S_9$, $S_{10}$) sont générés, qui représentent une mesure pour les amplitudes/fréquences momentanées de l'oscillation d'excitation/oscillation de lecture du résonateur (2) du gyroscope vibrant (1), et
   - le résonateur (2) est alimenté par des signaux de force ($S_3$ - $S_6$), dans lequel les signaux de force ($S_3$ - $S_6$) sont réglés en fonction des signaux de lecture numériques ($S_9$, $S_{10}$), de sorte que l'oscillation d'excitation/oscillation de lecture atteignent des amplitudes/fréquences définies,

   **caractérisé en ce que**
   les signaux de force ($S_3$ - $S_6$) sont générés à partir des signaux de sortie quantifiés ($S_1$ - $S_2$) d'un modulateur d'impulsions (37), par des signaux d'excitation/compensation numérique ($S_{15}$ - $S_{18}$), qui sont dérivés à partir des signaux de lecture numériques ($S_9$, $S_{10}$).

2. Procédé selon la revendication 1, **caractérisé en ce que** les signaux de sortie ($S_1$ - $S_2$) du modulateur d'impulsions (37) sont quantifiés de façon ternaire.

3. Procédé selon la revendication 2, **caractérisé en ce qu'**un premier et un second signal de sortie ($S_1$ - $S_2$) quantifiés de façon ternaire respectifs sont générés par un modulateur d'impulsions (37), dans lequel le premier signal de sortie ($S_1$) est transformé en une première série d'impulsions de force quantifiées de façon ternaire ($S_3$, $S_4$), et le second signal de sortie ($S_2$) est transformé en une seconde série d'impulsions de force quantifiées de façon ternaire ($S_5$, $S_6$), dans lequel la première série d'impulsions de force est la partie des signaux de force, qui est utilisée pour le réglage des amplitudes/fréquences désirées de l'oscillation d'excitation, et la seconde série d'impulsions de force est la partie des signaux de force, qui est utilisée pour le réglage des amplitudes/fréquences désirées de l'oscillation de lecture.

EP 1 620 698 B1

**4.** Procédé selon l'une des revendications précédentes, **caractérisé en ce que** la génération des signaux de lecture numériques ($S_9$, $S_{10}$) est effectuée tandis que

- une quantité de charge électrique, qui circule sur une électrode médiane mobile en raison des champs électriques, qui sont générés par les signaux de force, est mesurée au moyen d'un amplificateur de charge (31),
- un signal de sortie ($S_7$) analogique correspondant de l'amplificateur de charge (31) est converti en un signal de sortie numérique ($S_8$), et
- les signaux de lecture numériques ($S_9$, $S_{10}$) sont déterminés à partir du signal de sortie de l'amplificateur de charge (38) par l'intermédiaire d'une séparation de signal (33) en fonction des valeurs de signal de sortie ($S_1$, $S_2$) du modulateur d'impulsions (37) momentanées et/ou plus tardives.

**5.** Procédé selon l'une des revendications précédentes, **caractérisé en ce que** les signaux de lecture ($S_9$, $S_{10}$) sont fractionnés respectivement en une composante normale et une composante en quadrature ($S_{11}$ - $S_{14}$) au moyen d'un processus de démodulation.

**6.** Procédé selon la revendication 5, **caractérisé en ce que** des composantes normales et des composantes en quadrature des signaux d'excitation/compensation ($S_{15}$ - $S_{18}$), qui alimentent le modulateur d'impulsions (37), sont générées à partir des composantes normales et des composantes en quadrature ($S_{11}$ - $S_{14}$) grâce à un processus de régulation (36).

**7.** Dispositif électronique d'évaluation/réglage (30) utilisé dans un gyroscope vibrant (1), comportant :

- une unité (31, 32, 33) pour générer des signaux de lecture numériques ($S_9$, $S_{10}$), qui représentent une mesure pour les amplitudes/fréquences momentanées de l'oscillation d'excitation/oscillation de lecture du résonateur (2) du gyroscope vibrant (1),
- au moins un circuit de réglage (31-37), grâce auquel des signaux de force ($S_3$ - $S_6$) sont générés en fonction des signaux de lecture numériques ($S_9$, $S_{10}$) et sont distribués au résonateur (2), dans lequel les signaux de force ($S_3$ - $S_6$) sont réglés de sorte que l'oscillation d'excitation/oscillation de lecture atteignent des amplitudes/ fréquences déterminées,

**caractérisé par**

- un modulateur d'impulsions (37), qui est une partie du circuit de réglage (31-37), qui est alimenté par les signaux d'excitation/compensation numériques ($S_{15}$-$S_{18}$), qui sont dérivés des signaux de lecture numériques ($S_9$, $S_{10}$), dans lequel les signaux de force peuvent être générés à partir des signaux de sortie quantifiés ($S_1$, $S_2$) du modulateur d'impulsions (37).

**8.** Modulateur d'impulsions pour convertir un signal d'entrée complexe ($x(t)$) en un signal d'impulsion ($y(t)$), **caractérisé par**

- un étage de soustraction (51), qui génère un signal d'écart de réglage à partir de la différence du signal d'entrée complexe ($x(t)$) et d'un signal de rétroaction (52) ;
- un étage de conversion de signal, qui convertit le signal d'écart de réglage en un signal de réglage (57) ;
- un premier étage de multiplication (8), qui multiplie le signal de réglage (57) par un signal de mélange complexe oscillant avec une fréquence $\omega_0$ et génère ainsi au moins l'une d'une partie réelle (61) et d'une partie imaginaire d'un signal de réglage mélangé à $\omega_0$;
- un étage de quantification (62), qui quantifie au moins l'une d'une partie réelle et d'une partie imaginaire du signal de réglage mélangé à $\omega_0$ et ainsi génère le signal d'impulsion ($y(t)$) ;
- une unité de rétroaction, qui génère à partir du signal d'impulsion ($y(t)$), le signal de rétroaction (52) pour l'étage de soustraction.

**15**

Fig. 1

Fig. 2

--------

$x(t)$

$52$

$51$

$+$
$+$

$z^{-1}$
$53$

$54$

$55$

$57$
$a$
$56$

$e^{-j\omega_o t}$

$59$

$58$

$\Re$
$60$

$61$

$62$

$e^{+j\omega_o t}$

$52$

$63$

$y(t)$

Fig. 3

Fig. 4

Fig. 5

Fig. 6

Fig. 7

Fig. 8

Fig. 10

Fig. 9

EP 1 620 698 B1

EP 1 620 698 B1

Fig. 11

24

**IN DER BESCHREIBUNG AUFGEFÜHRTE DOKUMENTE**

**In der Beschreibung aufgeführte Patentdokumente**

- US 5992233 A